# EUROPÄISCHE PATENTANMELDUNG

(11) **EP 4 725 679 A1**
(43) Veröffentlichungstag der Anmeldung: **15.04.2026**
(21) Anmeldenummer: 24206521.7
(22) Anmeldetag: 14.10.2024
(51) Int. Cl.: B29C 48/885, B29C 48/10, B29C 48/90, B29C 48/92, B29C 55/28

(54) **TEMPERIERVORRICHTUNG UND FOLIENBLASANLAGE MIT EINER TEMPERIERVORRICHTUNG**

(71) Anmelder: Kdesign GmbH, 53639 Königswinter (DE)
(72) Erfinder: ZIMMERMANN, Richard, 53639 Königswinter (DE); LAMERS, Daniel, 53639 Königswinter (DE)
(74) Vertreter: Neumann Müller Oberwalleney Patentanwälte PartG mbB

(57) **Zusammenfassung**

Temperiervorrichtung (20) zum Temperieren eines in einer Abzugsrichtung extrudierten Folienschlauchs (1) oberhalb einer Einfriergrenze (14) umfassend:
mehrere Führungssegmente (21, 21', 21"), die um eine Längsachse (L), die parallel zur Abzugsrichtung des Folienschlauchs (1) angeordnet ist, verteilt angeordnet sind und eine zentrale Führungsöffnung zum Hindurchführen des Folienschlauchs (1) entlang der Längsachse (L) bilden, wobei die Führungssegmente (21, 21', 21") zum Einstellen des Durchmessers der Führungsöffnung quer zur Längsachse (L) verstellbar sind,
eine Führungsrolle (22) je Führungssegment (21, 21', 21"), wobei die Führungsrolle (22) zusammen mit dem Führungssegment (21, 21', 21") verstellbar ist und dazu bestimmt ist, den extrudierten Folienschlauch (1) zu führen, und
einen der Führungsrolle (22) zugeordneten Düsenabschnitt (23, 23', 23"), der zusammen mit dem Führungssegment (21, 21', 21") verstellbar ist, wobei der Düsenabschnitt (23, 23', 23") eine Ausblasdüse (45, 45') aufweist, die dazu ausgebildet ist, ein Temperiergas in Richtung zur Längsachse auszublasen,
**dadurch gekennzeichnet,**
dass der Düsenabschnitt (23, 23', 23"), bezogen auf die Längsachse (L), in zumindest teilweiser radialer Überdeckung mit der Führungsrolle (22) angeordnet ist.

## Beschreibung

Die Erfindung betrifft eine Temperiervorrichtung zum Temperieren eines in einer Abzugsrichtung extrudierten Folienschlauchs oberhalb einer Einfriergrenze, wobei die Temperiervorrichtung mehrere Führungssegmente umfasst, die um eine Längsachse, die parallel zur Abzugsrichtung des Folienschlauchs angeordnet ist, verteilt angeordnet sind und eine zentrale Führungsöffnung zum Hindurchführen des Folienschlauchs entlang der Längsachse bilden, wobei die Führungssegmente zum Einstellen des Durchmessers der Führungsöffnung quer zur Längsachse verstellbar sind. Ferner weist die Temperiervorrichtung eine Führungsrolle je Führungssegment auf, wobei die Führungsrolle zusammen mit dem Führungssegment verstellbar ist und dazu bestimmt ist, den extrudierten Folienschlauch zu führen. Ein der Führungsrolle zugeordneter Düsenabschnitt ist zusammen mit dem Führungssegment verstellbar, wobei der Düsenabschnitt eine Ausblasdüse aufweist, die dazu ausgebildet ist, ein Temperiergas in Richtung zur Längsachse auszublasen.

Ferner betrifft die Erfindung eine Folienblasanlage, wobei die Folienblasanlage einen Blaskopf zum Ausstoßen eines Folienschlauchs aus plastifiziertem thermoplastischem Kunststoff in einer Abzugsrichtung entlang einer Längsachse sowie einen Kühlgasring in Abzugsrichtung stromab des Blaskopfs umfasst, der eine zentrale Öffnung zum Hindurchführen des plastifizierten Folienschlauchs bildet und der zumindest eine innenliegende Austrittsdüse zum Anströmen des Folienschlauchs mit Kühlgas aufweist, damit der Folienschlauch an einer Einfriergrenze vom plastischen in einen erstarrten Zustand übergeht.

Aus der DE 20 2023 101 698 U1 ist eine solche Temperiervorrichtung und eine solche Folienblasanlage bekannt. Bei der dort gezeigten Temperiervorrichtung sind in Abzugsrichtung die Führungsrolle und der Düsenabschnitt hintereinander angeordnet. Die Düsenabschnitte sind in Form von Ausblasbalken ausgebildet, die an Schwenkarmen befestigt sind. An den Schwenkarmen sind zudem die Führungsrollen befestigt.

DE 23 57 138 A1 zeigt eine Nachkühlvorrichtung für Blasfolien aus thermoplastischen Kunststoffen mit mindestens einem jenseits der Einfriergrenze angeordneten Kühlluftring mit auf den Folienschlauch gerichteten Luftaustrittsöffnungen, der aus einer Vielzahl von Einzel-Blaselementen besteht, die jeweils paarweise an ihren benachbarten Enden um zur Längsachse senkrecht verlaufenden Achsen schwenkbar miteinander verbunden und in Bezug auf die Längsachse radial verstellbar sind. Die Nachkühlvorrichtung ist an einem Kalibrierkorb angeordnet, über den der Folienschlauch zentriert und geführt wird.

Die EP 1 491 319 A1 beschreibt eine Folienblasanlage, die stromab des Kalibrierkorbs den Folienschlauch umschließende Gasabsaugmittel mit im Wesentlichen ringförmig angeordneten Absaugdüsen zum Absaugen von monomerhaltigen Ausgasungen aufweist. Unmittelbar oberhalb, also stromab, der Gasabsaugmittel ist außerhalb des Folienschlauchs eine Nachtemperiereinheit in Form eines weiteren Kühlgasrings angeordnet, der als starrer Ring mit festem unveränderlichem Innendurchmesser zum Hindurchführen des Folienschlauchs ausgebildet ist.

Bei der Blasfolienherstellung bzw. der Blasfolienextrusion wird thermoplastisches Material über einen Extruder in einen Blaskopf gepresst, aus dessen Ringdüse oder Ringkanal ein Folienschlauch austritt, der nach oben abgezogen wird. Der heiße Folienschlauch ist einem inneren Überdruck ausgesetzt und wird unmittelbar nach dem Austritt aus der Ringdüse von außen und eventuell auch von innen im Wesentlichen ringförmig mit Kühlgas angeblasen und dadurch abgekühlt. Vom Austritt aus der Ringdüse ausgehend tritt nach einer Phase der Erweiterung der Folienschlauches ein weitgehendes Erstarren des thermoplastischen Materials ein, wonach der Folienschlauch im Wesentlichen seinen Durchmesser beibehält. Der Ort des Erstarrens wird als Einfriergrenze oder Frostgrenze bezeichnet. Nach dem Erstarren wird der Folienschlauch in Längsrichtung über einen Kalibrierkorb und eine Flachlegevorrichtung geführt und als Flachschlauch von einem Abzugswerk abgequetscht und abgezogen. Der Kalibrierkorb liegt bereits oberhalb der Einfriergrenze. Der Durchmesser des Folienschlauches und damit die spätere Folienbreite ist veränderbar und wird durch den inneren Überdruck im Folienschlauch sowie über die Einstellung des einstellbaren Kalibrierkorbes variiert.

Der noch relativ warme Folienschlauch kann vor dem Einlaufen in die Flachlegeeinheit mit dem weiteren Kühlgasring nachgekühlt werden, so dass eine geringere Gefahr eines Verblockens (eines Aneinanderhaftens) der Folienlagen im Abziehwerk besteht, nachdem der Folienschlauch zusammengelegt wurde. Dies führt dazu, dass die Folienlagen zum Aufwickeln auf mehrere Wickel oder bei einer späteren Verarbeitung nicht oder nur schwer voneinander getrennt werden können.

Beim Zuführen des Folienschlauchs in die Flachlegeeinheit und in das Abziehwerk besteht bei bekannten Folienblasanlagen dieser Art die Gefahr, dass der Folienschlauch nicht zentrisch zur Flachlegeeinheit und zum Abziehwerk zugeführt wird. Zudem kann sich diese nicht zentrische Lage des Folienschlauchs währen der Produktion ständig verändern. Dies kann zum Beispiel zu Falten im zusammengelegten Folienschlauch oder einem Kantenversatz führen.

Bei der Extrusion von Folienschläuchen kommt es bei bestimmten Rezepturen und Produkten zu sogenannten Planlage-Fehlern in der produzierten Folie. Solche Planlage-Fehler sind beispielsweise Wellen mit beliebiger Verteilung, Durchhänger im Bereich der Kanten, und sogenannter Bogenlauf.

Derartige Fehler zeigen sich deutlich beim Abrollen der Folie vom fertigen Wickel, und spannungslosen Ausrollen auf dem Boden. Vereinfacht gesagt sind Planlage-Fehler lokale Längenabweichungen einzelner Folienbereiche über die Bahnbreite.

Optisch sind diese Fehler häufig auch bereits in der unter Bahnspannung stehenden Folienbahn auf dem Weg vom Abzug zum Wickler oder innerhalb des Wicklers zu erkennen.

Im Bereich des noch runden Folienschlauchs sind Heiztunnel-Einrichtungen bekannt, die oberhalb der Einfriergrenze durch im Durchmesser fest angeordnete Infrarot-Heizstrahler den Folienschlauch nochmals erwärmen, um die Planlage-Güte der später flachgelegten Folie zu verbessern. Dabei nutzt man den Effekt, dass ungleiche Spannungsverteilungen durch unterschiedliche Molekülorientierungen am Umfang des Folienschlauchs und resultierende lokale Längenunterschiede durch Nachwärmen wieder abgebaut werden, sodass Planlage-Fehler in der flachgelegten Folie deutlich vermindert oder ganz verhindert werden.

Die ungleichen Spannungsverteilungen entstehen überwiegend durch Fließeffekte in der Extrusionsdüse des Blaskopfs, beispielsweise durch eine nicht optimal zum Rohstoff passende Flusskanalauslegung, durch ein unpassendes Heizprofil der Extrusionsdüse, oder durch eine ungleichmäßige Umfangs-Temperaturverteilung und/oder Umfangs-Mengenverteilung der Schmelze innerhalb und beim Austritt aus der Extrusionsdüse.

Darüber hinaus kann auch ein in der Höhe unpassend zur Einfriergrenze des Folienschlauchs eingestellter Kalibrierkorb, ein zu hoher Anpressdruck (Füllgrad) im Kalibrierkorb oder ein leicht außermittig zur Extrusionsdüse stehender Kalibrierkorb Planlage-Fehler hervorrufen.

Nachteilig ist bei den Heiztunnel-Einrichtungen die starre Anordnung der Heizstrahler, weil üblicherweise eine große Bandbreite unterschiedlicher Blasendurchmesser produziert wird. Der variable Abstand der Folie zum Heiztunnel ist ein zusätzlicher einflussstarker Parameter neben den eigentlichen Produktionsparametern.

Aufgabe der vorliegenden Erfindung ist es, eine Temperiervorrichtung und eine Folienblasanlage bereitzustellen, die eine möglichst effektive und variable Temperierung ermöglichen, wobei die Temperiervorrichtung eine möglichst geringe Bauhöhe in Richtung der Längsachse aufweist.

Die Aufgabe wird durch eine Temperiervorrichtung zum Temperieren eines in einer Abzugsrichtung extrudierten Folienschlauchs oberhalb einer Einfriergrenze gelöst, wobei die Temperiervorrichtung mehrere Führungssegmente umfasst, die um eine Längsachse, die parallel zur Abzugsrichtung des Folienschlauchs angeordnet ist, verteilt angeordnet sind und eine zentrale Führungsöffnung zum Hindurchführen des Folienschlauchs entlang der Längsachse bilden, wobei die Führungssegmente zum Einstellen des Durchmessers der Führungsöffnung quer zur Längsachse verstellbar sind. Ferner weist die Temperiervorrichtung eine Führungsrolle je Führungssegment auf, wobei die Führungsrolle zusammen mit dem Führungssegment verstellbar ist und dazu bestimmt ist, den extrudierten Folienschlauch zu führen. Ein der Führungsrolle zugeordneter Düsenabschnitt ist zusammen mit dem Führungssegment verstellbar, wobei der Düsenabschnitt eine Ausblasdüse aufweist, die dazu ausgebildet ist, ein Temperiergas in Richtung zur Längsachse auszublasen. Der Düsenabschnitt ist hierbei, bezogen auf die Längsachse, in zumindest teilweiser radialer Überdeckung mit der Führungsrolle angeordnet.

Der Düsenabschnitt überdeckt bzw. überlappt die Führungsrolle somit zumindest teilweise in einer radialen Richtung betrachtet. Durch diese sich in Längsrichtung überlappende Anordnung der Düsenabschnitte und der Führungsrollen lässt sich die Bauhöhe der Temperiervorrichtung in Richtung der Längsachse reduzieren. Hierdurch werden auf sehr kleiner Bauhöhe zwei Funktionen verwirklicht, nämlich das Temperieren des Folienschlauchs einerseits und das Führen des Folienschlauchs andererseits. Die Temperiervorrichtung ist somit deutlich kompakter als herkömmliche Temperiervorrichtungen.

Dies ist von besonderer Bedeutung, da der Bauraum in Abzugsrichtung, also in Richtung der Längsachse, häufig zum Beispiel durch niedrige Hallenhöhen oder durch weitere Anlagenkomponenten begrenzt ist. Eine niedrige Bauhöhe der gesamten Folienblasanlage kann auch aus anderen Gründen wünschenswert sein, da sich dies zum Beispiel positiv auf die Kosten einer Anlage auswirken kann.

Andererseits besteht die Möglichkeit ohne Reduzierung der Bauhöhe der Folienblasanlage, oder mit einer geringeren Reduzierung der Bauhöhe als theoretisch möglich, in dem gegenüber herkömmlicher Folienblasanlagen gewonnenen Bauraum weitere Sensoren oder Anlagenkomponenten anzuordnen. Ebenso wäre es möglich, den gewonnenen Bauraum für eine Anordnung weiterer Führungsebenen mit weiteren Führungssegmenten zu nutzen, um die Temperierleistung gegenüber herkömmlichen Temperiereinheiten zur erhöhen.

Eine effiziente und variable Nachtemperierung wird dadurch ermöglicht, dass die Führungssegmente zum Einstellen eines Durchmessers der Führungsöffnung quer zur Längsachse verstellbar sind. Hierdurch wird gewährleistet, dass die Ausblasdüsen unabhängig vom Durchmesser des produzierten Folienschlauchs stets einen optimalen Abstand zu diesem aufweisen.

Als Durchmesser der Führungsöffnung ist der größtmögliche Durchmesser eines gedachten Kreises innerhalb der verstellbaren Führungsrollen zu verstehen.

Der Düsenabschnitt kann, bezogen auf die Längsachse, zumindest teilweise radial außerhalb der Führungsrolle angeordnet sein. Der Düsenabschnitt kann hierbei vollständig radial außerhalb der Führungsrolle angeordnet sein. Alternativ ist es auch denkbar, dass der Düsenabschnitt zusätzlich zur radialen Überdeckung teilweise in axialer Überdeckung mit der Führungsrolle angeordnet ist. Dies bedeutet, dass der Düsenabschnitt die Führungsrolle, in einer axialen Richtung betrachtet, zumindest teilweise überdeckt bzw. überlappt. Dies kann bezogen auf die Abzugsrichtung auf einer Seite der Führungsrolle der Fall sein, oder auf beiden Seiten der Führungsrolle. Dies bedeutet, dass der Düsenabschnitt zumindest einen Abschnitt aufweist, der stromauf und/oder stromab der Führungsrolle in axialer Überdeckung zu dieser angeordnet ist.

Durch die axiale Überdeckung des Düsenabschnitts mit der Führungsrolle ist es möglich, die Ausblasdüse in einem geringeren Abstand zum Folienschlauch zu positionieren als ohne axiale Überdeckung und somit die Kühlleistung zu erhöhen.

Um eine möglichst kompakte Bauform zu erzielen, kann vorgesehen sein, dass der Düsenabschnitt zumindest über die gesamte Länge der Ausblasdüse, zumindest über 50 % der Länge der Ausblasdüse oder zumindest über 25 % der Länge der Ausblasdüse eine maximale Höhe in Richtung parallel zur Längsachse aufweist, die höchstens dem 2,0-fachen, dem 1 ,5-fachen, dem 1 ,25-fachen oder dem 1,0-fachen der Höhe der Führungsrolle entspricht. Der Düsenabschnitt kann in Umfangsrichtung um die Längsachse eine variable Höhe aufweisen, sodass hier auf die maximale Höhe in Umfangsrichtung Bezug genommen wird.

Um eine möglichst kompakte Bauweise der Temperiervorrichtung zu erzielen, können die Führungsrollen in Umfangsrichtung benachbarter Führungssegmente in Richtung der Längsachse höhenversetzt zueinander angeordnet sein und sich, zumindest bei Unterschreiten eines vorbestimmten Durchmessers der Führungsöffnung, in Draufsicht in Richtung der Längsachse zumindest teilweise kreuzen.

Um eine möglichst kompakte Bauform zu erzielen, kann hierbei vorgesehen sein, dass die Düsenabschnitte der sich überkreuzenden Führungssegmente zumindest über einen Bereich, in dem sich die Führungssegmente überkreuzen bzw. überkreuzen können, eine maximale Höhe in Richtung der Längsachse aufweisen, die höchstens dem 2,0-fachen, dem 1,5-fachen, dem 1,25-fachen oder dem 1,0-fachen der Höhe der jeweiligen Führungsrolle entspricht.

Insbesondere bei einer axialen Überdeckung des Düsenabschnitts mit der Führungsrolle kann die Ausblasdüse derart gestaltet sein, dass das Temperiergas in einem Winkel von 90° zur Längsachse ausströmt. Es kann jedoch vorteilhaft sein, die Ausblasdüse derart zu gestalten, dass das Temperiergas mindestens einen Strömungsvektor in und/oder entgegen der Abzugsrichtung in einem Winkel von weniger als 90°, weniger als 60° oder weniger als 45° zur Längsachse aufweist. Der mindestens eine Strömungsvektor kann insbesondere von der Führungsrolle weg gerichtet sein, um Beeinflussungen der Temperiergasströmung durch die Führungsrolle oder ein Abheben des Folienschlauchs von der Führungsrolle zu vermeiden.

Der Düsenabschnitt kann mehrere Ausblasdüsen aufweisen, die zum Beispiel in Umfangsrichtung nebeneinander und/oder in axialer Richtung hintereinander angeordnet sind.

Es kann vorgesehen sein, dass zumindest eine der Ausblasdüsen in Abzugsrichtung und zumindest eine weitere der Ausblasdüsen entgegen der Abzugsrichtung ausgerichtet ist.

Der Düsenabschnitt kann integraler Bestandteil eines der Führungssegmente sein. Denkbar ist auch, dass der Düsenabschnitt ein separates, mit dem Führungssegment verbundenes Bauteil ist.

Jedes Führungselement kann mehrere Führungsrollen aufweisen.

Jeder Führungsrolle können mehrere Düsenabschnitte zugeordnet sein. Es ist auch möglich, dass mehreren Führungsrollen ein gemeinsamer Düsenabschnitt zugeordnet ist.

Die Temperiervorrichtung kann einen Rahmen aufweisen, an dem die Führungssegmente zum Einstellen eines Durchmessers der Führungsöffnung verstellbar angelenkt sind. Der Rahmen kann als von übrigen Anlagenkomponenten einer Folienblasanlage separate Baueinheit gestaltet sein.

Die Temperiervorrichtung kann zum Heizen und/oder Kühlen des Folienschlauchs ausgebildet sein. Hierzu kann die Temperiervorrichtung eine Kühleinheit zum Kühlen des Temperiergases und/oder eine Heizeinheit zum Heizen des Temperiergases aufweisen.

Um ein Aneinanderhaften (Verblocken) der Folie beim Zusammenlegen zu verringern oder zu vermeiden, kann der Folienschlauch mittels der Temperiervorrichtung nachgekühlt werden. Hierdurch kann die Folienblasanlage mit höherer Leistung, also einer höheren Abzugsgeschwindigkeit des Folienschlauchs betrieben werden ohne Gefahr zu laufen, dass der Folienschlauch zu warm der Flachlegeinheit zugeführt wird und Verblockungsgefahr besteht. Die Ausstoßleistung, das heißt die Menge an produzierter Folie pro Zeit, kann somit gesteigert werden. Ferner lässt sich hierdurch der Einsatz von Additiven im Kunststoffmaterial zur Verringerung der Verblockungsneigung reduzieren oder eventuell sogar vermeiden. Neben einer Kostenersparnis kann sich die Reduktion von Additiven auch positiv auf die Lebensdauer der Schnecke des Extruders, bzw. der Extruder, auswirken. Additive zur Verringerung der Verblockungsneigung umfassen meist mineralische Füllstoffe, die einen erhöhten Verschleiß der Komponenten des Extruders, insbesondere der Schnecke, zur Folge haben können.

Zur Verbesserung der Planlage des Folienschlauchs kann hingegen der Folienschlauch mittels der Temperiervorrichtung nachbeheizt werden, um ungleichmäßige Spannungsverteilungen der molekularen Struktur abzubauen. Dies bewirkt eine Verbesserung der Planlage bzw. der Ebenheit des Folienschlauchs.

Von Vorteil ist hierbei insbesondere, dass ein und dieselbe Temperiervorrichtung sowohl zum Kühlen von Schlauchfolien aus verblockungssensitivem Material als auch zum Heizen von Schlauchfolien aus planlagesensitivem Material gleichermaßen geeignet ist. Somit muss bei einer Umstellung zwischen verblockungssensitivem Material und planlagesensitivem Material die Temperiervorrichtung nicht ausgetauscht werden.

Die Temperiervorrichtung kann mindestens zwei in Richtung der Längsachse übereinander angeordnete Führungsebenen von Führungssegmenten, die um die Längsachse verteilt angeordnet sind, aufweisen. Die Führungssegmente der mehreren Führungsebenen können über den Umfang derart angeordnet sein, dass über den Umfang verteilt stets mindestens zwei Führungssegmente in Richtung der Längsachse übereinander angeordnet sind. Je Führungsebene können die Führungssegmente identisch angeordnet sein, sodass der Abstand zwischen den Führungssegmenten zweier Führungsebenen identisch ist. In der Praxis hat sich gezeigt, dass sich mindestens zwei Führungsebenen von Führungssegmenten bzw. zwei übereinander angeordnete Rollen vorteilhaft für eine stabile Führung des Folienschlauchs auswirken. Hierbei müssen die Rollen nicht zwingend axial zueinander ausgerichtet werden, wobei dies für einen einfachen Betätigungsmechanismus der Führungssegmente von Vorteil ist.

Die Temperiervorrichtung kann Verstelleinheiten aufweisen, mittels derer die Führungssegmente derart quer zur Längsachse verstellbar sind, dass die jeweilige Führungsrolle zentrisch zur Längsachse bewegt wird. Hierfür kann die Temperiervorrichtung einen Rahmen aufweisen, durch den der Folienschlauch in Richtung der Längsachse hindurchführbar ist. Die Verstelleinheiten können jeweils einen Schwenkarm, der am Rahmen schwenkbar befestigt ist, einen Träger für die Führungsrolle, wobei der Träger mit dem Schwenkarm schwenkbar verbunden ist, und eine Koppelstange, die mit dem Träger schwenkbar verbunden ist, aufweisen. Hierbei weist zumindest eine der Verstelleinheiten einen Stellmechanismus auf, mittels dessen die Koppelstange der zumindest einen Verstelleinheit gelenkig mit dem Rahmen verbunden ist. Diese Anordnung ermöglicht bei geringem baulichem Aufwand für jeden Durchmesser des Folienschlauchs eine präzise zentrische Anstellung der Führungsrollen an den Folienschlauch. Einzelheiten solcher Verstelleinheiten sind in der WO 2020/244737 A1 gezeigt, deren Inhalt hiermit durch Verweis einbezogen wird.

Die Aufgabe wird ferner durch eine Folienblasanlage gelöst, wobei die Folienblasanlage einen Blaskopf zum Ausstoßen eines Folienschlauchs aus plastifiziertem thermoplastischem Kunststoff in einer Abzugsrichtung entlang einer Längsachse sowie einen Kühlgasring in Abzugsrichtung stromab des Blaskopfs umfasst, der eine zentrale Öffnung zum Hindurchführen des plastifizierten Folienschlauchs bildet und der zumindest eine innenliegende Austrittsdüse zum Anströmen des Folienschlauchs mit Kühlgas aufweist, damit der Folienschlauch an einer Einfriergrenze vom plastischen in einen erstarrten Zustand übergeht. Die Folienblasanlage weist hierbei eine oben beschriebene Temperiervorrichtung auf, die dazu bestimmt ist, stromab der Einfriergrenze angeordnet zu werden.

Die Folienblasanlage kann ferner einen Kalibrierkorb stromab des Kühlgasrings mit mehreren Kalibrierelementen aufweisen, die dazu eingerichtet sind, den Folienschlauch zu umschließen und eine Kalibrieröffnung zu bilden, um den Folienschlauch zu führen, wobei die Kalibrierelemente zum Einstellen eines Durchmessers der Kalibrieröffnung verstellbar sind. Die Temperiervorrichtung kann stromab des Kalibierkorbs angeordnet sein und mit dem Kalibierkorb verbunden sein oder als separates Element axial beabstandet zu diesem angeordnet sein.

Gemäß einer beispielhaften Ausführungsform umfasst die Folienblasanlage stromab der Temperiervorrichtung eine Flachlegeeinheit zum Zusammenlegen des Folienschlauchs. Hierbei ist ein Bereich zwischen der Temperiervorrichtung und der Flachlegeeinheit frei von den Folienschlauch beeinflussenden Elementen.

Beispielhafte Ausführungsformen werden im Folgenden unter Bezugnahme auf die Figuren näher erläutert. Hierin zeigt
- Figur 1: eine Gesamtansicht einer Folienblasanlage mit einer Temperiervorrichtung mit einer ersten Ausführungsform von Einstellsegmenten,
- Figur 2: eine Draufsicht der Temperiervorrichtung gemäß Figur 1,
- Figur 3: eine perspektivische Ansicht einer zweiten Ausführungsform eines Einstellsegments,
- Figur 4: eine Draufsicht des Einstellsegments gemäß Figur 3,
- Figur 5: eine schematische Seitenansicht der ersten Ausführungsform des Einstellsegments gemäß Figur 1,
- Figur 6: eine schematische Seitenansicht der zweiten Ausführungsform des Einstellsegments gemäß Figur 3,
- Figur 7: eine schematische Seitenansicht einer dritten Ausführungsform eines Einstellsegments und
- Figur 8: eine schematische Seitenansicht einer vierten Ausführungsform eines Einstellsegments.

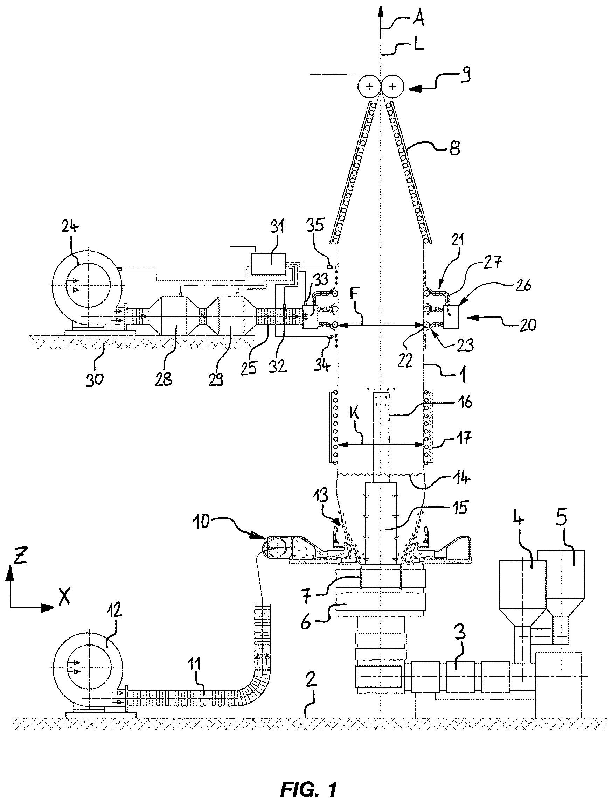

In **Figur 1** ist in Seitenansicht, teilweise im Längsschnitt entlang einer Längsachse L eine Folienblasanlage zur Herstellung eines Folienschlauchs 1 gezeigt. Zur Verdeutlichung der Perspektive, auch der folgenden Figuren, ist ein kartesisches Koordinatensystem angegeben, wobei die Z-Achse die Hochachse parallel zur Längsachse L ist und die beiden Querachsen X und Y eine horizontale Ebene aufspannen. Auf einem Maschinenfundament 2 steht ein Extruder 3, an dem zwei Aufgabetrichter 4, 5 für thermoplastisches Kunststoffmaterial zu erkennen sind. Ein in Granulatform über die Aufgabetrichter 4, 5 aufgegebenes thermoplastisches Kunststoffmaterial wird durch Druck und zusätzliche Heizmittel in einer Schnecke des Extruders 3 plastifiziert und homogenisiert und in einen sich an den Extruder 3 anschließenden Blaskopf 6 mit vertikaler Achse entlang der Längsachse L der Folienblasanlage gedrückt. Der Blaskopf 6 hat auf einer Oberseite eine schematisch dargestellte Ringdüse 7, aus welcher der sich erweiternde achssymmetrische Folienschlauch 1 aus zunächst noch plastifiziertem Folienmaterial austritt. Nach Erstarrung des Folienmaterial behält der Folienschlauch 1 seinen Durchmesser im Wesentlichen bei. Der Folienschlauch 1 wird in einer Flachlegeeinheit 8 flach gedrückt und über ein Abziehwerk 9 nach oben abgezogen. Der flachgedrückte Folienschlauch 1 wird anschließend auf Coils bzw. Wickel (hier nicht dargestellt) aufgewickelt. In Richtung vom Blaskopf 6 zum Abziehwerk 9 werden die funktionellen Begriffe "vor" und "stromab" derart verwendet, dass sie in räumlicher Beziehung "unter" und "oberhalb" bedeuten.

Unmittelbar über dem Blaskopf 6 ist ein Kühlgasring 10 mit einer teilweise schematisch dargestellten Gaszuleitung 11 gezeigt. Die Gaszuleitung 11 ist eingangsseitig mit einem Gebläse 12 verbunden, über das Kühlgas, in der Regel Luft, zum Kühlgasring 10 gefördert wird. Hierzu wird vom Gebläse 12 Umgebungsluft angesaugt. Es können auch andere Kühlgase oder Kühlgasgemische eingesetzt werden. Der Kühlgasring 10 hat innenliegende Austrittsdüsen 13, aus denen das Kühlgas ausströmt und den Folienschlauch 1, der unter erhöhtem Innendruck steht und durch eine zentrale Öffnung 19 des Kühlgasrings 10 hindurchgeführt wird, ringförmig im Wesentlichen wandparallel anströmt. Die Kühlgasströmung vom Gebläse 12 bis hin zum Folienschlauch 1 ist mit Pfeilen symbolisiert. Der in diesem Bereich plastifizierte Folienschlauch 1 erweitert sich zunächst im Durchmesser unter dem genannten Überdruck im Inneren, bis er unter der Wirkung des Kühlgases erhärtet und einen konstanten Durchmesser annimmt. Der Ort des Übergangs vom plastifizierten Material zum erhärteten Material wird "Einfriergrenze" genannt und ist mit 14 bezeichnet. Die Einfriergrenze 14 muss hierbei nicht eine klare Linie sein, sondern kann sich über einen begrenzten Bereich in Richtung der Längsachse L erstrecken. Zur Erzeugung eines inneren Überdrucks ist zentral am Blaskopf 6 eine Innenkühlturm 15 angebracht, über den Kühlgas in das Innere des Folienschlauchs 1 eingeleitet wird. Über ein Gasabsaugrohr 16 wird das eingeleitete Kühlgas derart abgeführt, dass ein definierter Innendruck herrscht.

Oberhalb, das heißt in Abzugsrichtung A entlang der Längsachse L stromab von der Einfriergrenze 14, befindet sich ein Kalibrierkorb 17, der Kalibrierelemente 18 mit übereinanderliegenden Laufrollenanordnungen enthält, die sich im Wesentlichen ringförmig um den Folienschlauch 1 legen. Um eine Anpassung an Folienschläuche 1 unterschiedlichen Durchmessers zu ermöglichen, befinden sich hierbei die Laufrollenanordnungen in der Regel auf einzelne Teilumfänge bildenden schwenkbaren Segmenten, mittels derer der Durchmesser einer Kalibrieröffnung des Kalibrierkorbs 17, durch die der Folienschlauch 1 entlang der Längsachse L hindurchgeführt ist, verändert werden kann. Im Querschnitt bilden diese Segmente eine polygonförmige Kalibrieröffnung. Im gezeigten Beispiel weist die Kalibrieröffnung den Durchmesser Kauf.

Der noch relativ warme Folienschlauch 1 wird durch den Kalibrierkorb 17 im Querschnitt stabilisiert und geführt. Der Kalibrierkorb 17 kann relativ zum Blaskopf 6 höhenverstellbar angeordnet sein, um stets eine optimale Höhenposition relativ zur Einfriergrenze 14 einnehmen zu können.

Stromab des Kalibrierkorbs 17 ist eine Temperiervorrichtung 20 angeordnet, die zum Temperieren des Folienschlauchs 1 dient. Die Temperiervorrichtung 20 weist mehrere über den Umfang des Folienschlauchs 1 verteilt angeordnete Führungssegmente 21 mit übereinander angeordneten Führungsrollen 22 und Düsenabschnitte 23 auf. Die Führungsrollen 22 umschließen den Folienschlauch 1 und bilden eine Führungsöffnung mit einem Durchmesser F. Im vorliegenden Ausführungsbeispiel ist der Durchmesser F der Führungsöffnung identisch zum Durchmesser K der Kalibrieröffnung. Die Führungsrollen 22 dienen unter anderem zum Führen des Folienschlauchs 1 zentrisch zur Längsachse L, sodass der Folienschlauch 1 zentrisch geführt in die Flachlegeeinheit 8 geführt wird, um Falten oder Kantenversatz zu vermeiden. Wie nachfolgend noch detailliert erläutert wird, sind die Führungssegmente 21 an Einstellsegmenten befestigt, die an einem Rahmen der Temperiervorrichtung 20 verstellbar angelenkt sind, um den Durchmesser F der Führungsöffnung variieren zu können.

Mittels der Düsenabschnitte 23 wird Temperiergas schräg in Abzugsrichtung nach oben und unten auf den Folienschlauch 1 ausgeblasen. Grundsätzlich ist es auch denkbar, dass das Temperiergas horizontal, das heißt in einer Ebene senkrecht zur Längsachse L, gegen den Folienschlauch 1 ausgeblasen wird.

Die Durchmesser K und F sind jeweils definiert als der größtmögliche Durchmesser eines gedachten Kreises innerhalb der verstellbaren Elemente, also der Kalibrierelemente 18 des Kalibrierkorbs 17 sowie der Führungsrollen 22 der Temperiervorrichtung 20.

Im gezeigten Ausführungsbeispiel ist die Temperiervorrichtung 20 mit einem axialen Abstand zum Kalibrierkorb 17 angeordnet. Es ist jedoch auch denkbar, dass die Temperiervorrichtung 20 mit dem Kalibrierkorb 17 verbunden ist bzw. mit diesem eine Einheit bildend integriert ist. Stromab des Kalibirierkorbs 17 mit integrierter Temperiervorrichtung kann eine weitere Temperiervorrichtung angeordnet sein. Alternativ ist es auch möglich, dass die Folienblasanlage keinen Kalibrierkorb aufweist.

Stromab der Temperiervorrichtung 20 kann eine hier nicht dargestellte Absaugeinheit angeordnet sein, durch die der Folienschlauch 1 zentral hindurchgeführt ist, und mit der Temperiergas abgesaugt wird. Damit möglichst viel Temperiergas abgesagt werden kann, bevor dieses in die Umgebung gelangt, kann zudem stromab der Absaugeinheit eine Leitblechanordnung mit mehreren Leitblechen vorgesehen, die rondenförmig ausgebildet und quer zur Längsachse L angeordnet ist und einen verhältnismäßig kleinen Abstand zum Folienschlauch 1 im Vergleich zum Abstand der Absaugeinheit aufweist.

Die Düsenabschnitte 23 werden von einem Gebläse 24 mit Temperiergas versorgt. Das Gebläse 24 saugt Umgebungsluft an und leitet diese zu den Düsenabschnitten 23. Hierzu dient eine Zuführleitung 25, die das Gebläse 24 mit einem Luftverteilerring 26 der Temperiervorrichtung 20 verbindet. Der Luftverteilerring 26 ist ringförmig um den Folienschlauch 1 und in dem gezeigten Ausführungsbeispiel um die Führungssegmente 21 angeordnet und dient zum gleichmäßigen Verteilen des Temperiergases über den Umfang. Der Luftverteilerring 26 ist über Zuleitungen 27 mit den einzelnen Düsenabschnitten 23 strömungsverbunden.

In der Zuführleitung 25 ist eine Kühleinheit in Form eines Luftkühlers 28 sowie eine Heizeinheit in Form eines Lufterhitzers 29 angeordnet, wobei auch externe Kühl- oder Heizquellen genutzt werden können. Somit kann das Temperiergas wahlweise gekühlt oder erhitzt werden, bevor es zu den Düsenabschnitten 23 geleitet wird. Alternativ ist es auch möglich, dass nur der Luftkühler 28 oder nur der Lufterhitzer 29 vorgesehen ist. Die Anordnungsreihenfolge des Gebläses 24, des Luftkühlers 28 und des Lufterhitzers 29 kann beliebig gewählt werden.

Es ist anzumerken, dass das Gebläse 24, der Luftkühler 28 und der Lufterhitzer 29 in Höhe der Temperiervorrichtung 20 dargestellt sind. Hierzu können diese Bauteile in einem Turmgerüst 30 (hier schematisch angedeutet) der Folienblasanlage angeordnet sein. Sie können jedoch auch auf dem Maschinenfundament 2 stehen.

Die Folienblasanlage weist ferner eine Steuereinheit 31 auf, die steuerungstechnisch mit dem Gebläse 24, dem Luftkühler 28 und dem Lufterhitzer 29 verbunden ist, um diese zu steuern. Für die Steuerung werden die Signale mehrerer Sensoren verarbeitet. Die Steuereinheit 31 ist mit einem Temperatursensor 32 in der Zuführleitung 25 zum Erfassen der Temperatur des Temperiergases, mit einem Drucksensor 33 am Luftverteilerring 26 zum Detektieren des Drucks im Luftverteilerring 26, mit einem Temperatursensor 34 stromauf der Temperiervorrichtung 20 zum Erfassen der Temperatur des Folienschlauchs 1 vor dem Einlauf in die Temperiervorrichtung 20 und mit einem Temperatursensor 35 stromab der Temperiervorrichtung 20 zum Erfassen der Temperatur des Folienschlauchs 1 nach dem Auslauf aus der Temperiervorrichtung 20 verbunden.

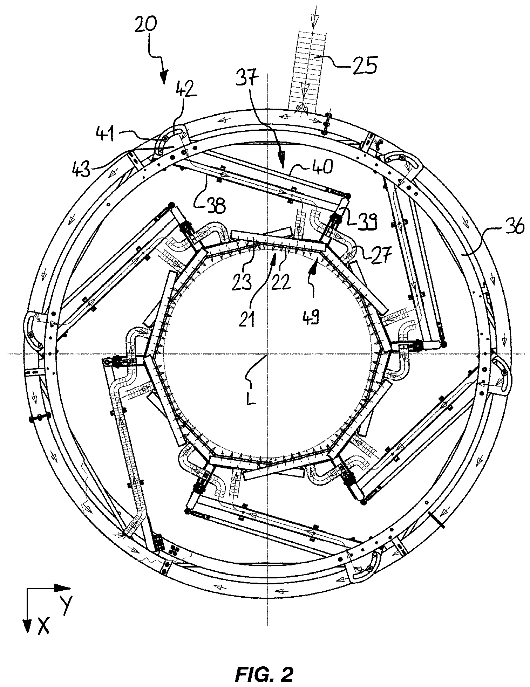

**Figur 2** zeigt eine Draufsicht der Temperiervorrichtung 20 gemäß **Figur 1****,** wobei Bauteile, die mit Bauteilen der Folienblasanlage gemäß **Figur 1** übereinstimmen, mit denselben Bezugszeichen versehen und dort beschrieben sind.

Die Temperiervorrichtung 20 weist einen Rahmen 36 auf, an dem die nachfolgend beschriebenen beweglichen Elemente befestigt sind und der gegebenenfalls relativ zum Blaskopf 6 höhenverstellbar angeordnet ist. An dem Rahmen 36 ist ferner der Luftverteilungsring 28 befestigt.

Der Rahmen 36 bildet einen zentralen Durchgang, durch den der Folienschlauch 1 parallel zur Längsachse L gemäß **Figur 1** hindurchgeführt ist. Über den Umfang sind sechs Verstelleinheiten 37 verteilt angeordnet. Die Verstelleinheiten 37 dienen zum Verstellen der Einstellsegmente 49 in einer Richtung radial zur Längsachse L. Die Einstellsegmente 49 tragen die Führungssegmente 21 mit den Führungsrollen 22 und den Düsenabschnitten 23.

Die Verstelleinheiten 37 weisen jeweils einen Schwenkarm 38 auf, der am Rahmen 36 schwenkbar befestigt ist. Der Schwenkarm 38 ist hierbei um eine Schwenkachse schwenkbar, die parallel zur Längsachse L angeordnet ist.

Ferner weisen die Verstelleinheiten 37 jeweils einen Träger 39 auf, der gleichzeitig Bestandteil des jeweiligen Einstellsegments 49 ist und in dem gezeigten Ausführungsbeispiel sechs Führungsrollen 22 mit Düsenabschnitten 23 trägt. Die Führungsrollen 22 sind paarweise in Richtung der Längsachse L voneinander beabstandet und in Richtung der Längsachse L betrachtet V-förmig überlappend angeordnet. Drei dieser Paare sind in dem gezeigten Ausführungsbeispiel übereinander angeordnet, wie dies in **Figur 1** ersichtlich ist. Jedes Paar von Führungsrollen 22 bildet eine Führungsebene. Jeweils drei Führungsrollen 22 verschiedener Führungsebenen sind übereinander und in Richtung der Längsachse L deckungsgleich zueinander angeordnet. Der Träger 39 ist schwenkbar mit dem Schwenkarm 38 verbunden. Der Träger 39 ist hierbei um eine Schwenkachse mit dem Schwenkarm 38 schwenkbar verbunden, die parallel zur Längsachse L angeordnet ist.

Ferner weisen die Verstelleinheiten 37 jeweils eine Koppelstange 40 auf, die mit dem Träger 39 schwenkbar verbunden ist. Letztendlich weisen die Verstelleinheiten 37 jeweils einen Stellmechanismus auf, mittels dessen die Koppelstange 40 gelenkig mit dem Rahmen 36 verbunden ist. Die Koppelstangen 40 der Verstelleinheiten 37 sind jeweils über ein Koppelelement (nicht dargestellt) drehgelenkig und verschiebbar mit dem Rahmen 36 verbunden. Das Koppelelement ist drehbar mit dem Rahmen 36 verbunden. Die Koppelstange 40 ist verschiebbar mit dem Koppelelement gekoppelt. Darüber hinaus ist jeweils an der Koppelstange 40 ein Mitnehmer 41 befestigt, der entlang einer Führung 42 am Rahmen 36 translatorisch bewegbar geführt ist. Die Führung 42 ist in dem gezeigten Ausführungsbeispiel eine Nut in einer Platte 43, die fest am Rahmen 36 befestigt ist. Es sind jedoch auch andere Führungssysteme denkbar. Die Führung 42 ist kurvenförmig gestaltet und derart angepasst, dass der Träger 39 stets zentrisch zur Längsachse L ausgerichtet ist, unabhängig vom Abstand zur Längsachse L bzw. zum Folienschlauch 1. Hierdurch wird eine präzise zentrische Ausrichtung der Führungssegments 21 und damit die Führungsrollen 22 relativ zum Folienschlauch 1 gewährleistet.

Grundsätzlich sind auch andere Stellmechanismen, wie zum Beispiel Parallelogramm-Anordnungen denkbar, wobei gewährleistet sein sollte, dass die Träger 39 zumindest weitestgehend radial zur Längsachse L verstellbar sind.

Einzelheiten verschiedener Verstelleinheiten sind in der WO 2020/244737 A1 gezeigt, deren Inhalt hiermit durch Verweis einbezogen wird. Jede der dort gezeigten Ausführungsformen der Verstelleinheiten kann vorliegend eingesetzt werden.

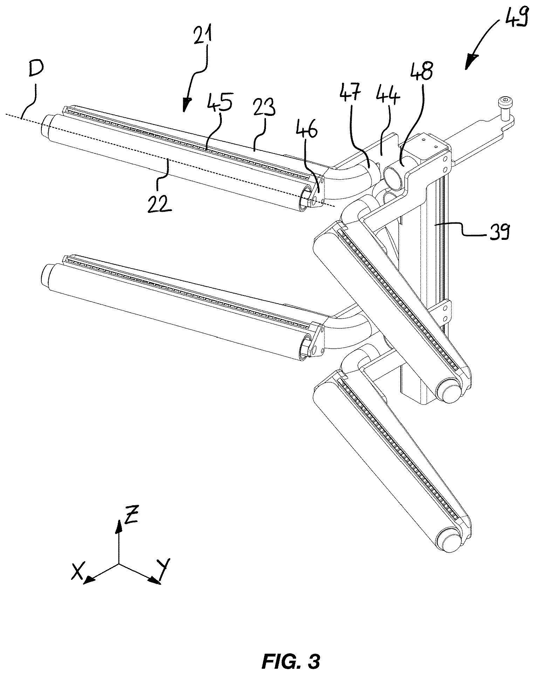

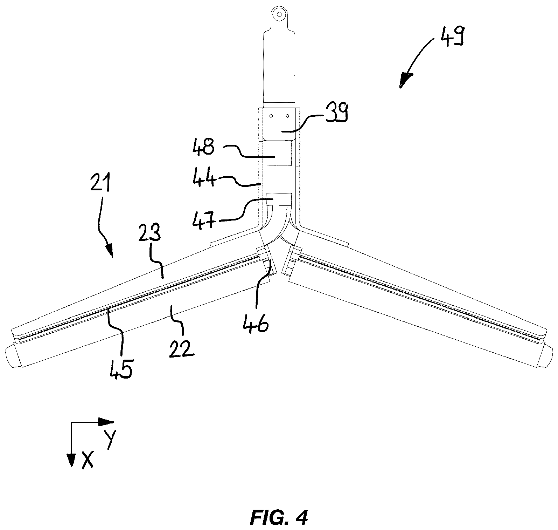

Die **Figuren 3** **und** **4** zeigen unterschiedliche Ansichten einer zweiten Ausführungsform eines Einstellsegments 49. Bauteile, die mit Bauteilen der ersten Ausführungsform gemäß **Figur 2** übereinstimmen, sind mit denselben Bezugszeichen versehen und dort beschrieben.

Im Unterschied zur ersten Ausführungsform sind die Führungsrollen 22 der paarweise V-förmig angeordneten Führungsrollen 22 in Richtung der Längsachse L betrachtet nicht überlappend angeordnet, sondern sie sind voneinander beabstandet zueinander angeordnet, wie dies insbesondere in **Figur 4** erkennbar ist. Zudem sind nicht drei Paare von Führungsrollen 22 übereinander angeordnet, sondern zwei Paare.

An dem Träger 39 des Einstellsegments 49 sind über Halteplatten 44 Düsenabschnitte 23 befestigt. An den Düsenabschnitten 23 ist jeweils eine Führungsrolle 22 gelagert befestigt. Es ist auch denkbar, dass an jedem Düsenabschnitt 23 mehrere Führungsrollen 22 drehbar gelagert sind. Ebenso ist es möglich, dass entlang einer Führungsrolle 22 mehrere Düsenabschnitte 23 vorgesehen sind.

Die Düsenabschnitte 23 sind jeweils rohrförmig zum Durchleiten von Temperiergases ausgebildet und somit integraler Bestandteil des Einstellsegments 49. Damit ist gemeint, dass kein weiteres Element vorgesehen ist, wie zum Beispiel ein Tragarm, an dem der Düsenabschnitt 23 als separates Bauteil und die Führungsrolle 22 montiert sind. Eine solche Ausführungsform ist jedoch ebenfalls möglich.

Im Folgenden wird repräsentativ für alle Düsenabschnitte 23 einer der Düsenabschnitte 23 beschrieben. Der Düsenabschnitte 23 weist eine Ausblasdüse 45 auf, die schlitzförmig gestaltet ist und sich entlang der Längserstreckung der Führungsrolle 22 erstreckt. Wie später noch erläutert wird, weist der Düsenabschnitt 23 eine in Abzugsrichtung gerichtete Ausblasdüse 45 und eine entgegen der Abzugsrichtung gerichtete Ausblasdüse (hier nicht erkennbar) auf.

Der Düsenabschnitt 23 dient als Trägerelement für die Führungsrolle 22, die über eine Lagerplatte 46 mit dem Düsenabschnitt 23 verbunden und um eine Drehachse D drehgelagert ist. Der Düsenabschnitt 23 kann aus Kunststoff oder Metall, in einer Ausgestaltung im 3D-Druckverfahren, hergestellt sein. Durch die Herstellung im 3D-Druckverfahren, oder einem vergleichbaren additiven Herstellungsverfahren, also dem Auftragen von Werkstoffen Schicht für Schicht, lassen sich beliebige Geometrien für die Kanäle des Temperiergases erzeugen. Dadurch können zum Beispiel besondere Geometrien erzeugt werden, die eine gleichmäßige Luftverteilung über die Länge der Ausblasdüsen 45 gewährleisten. Darüber hinaus können die Düsenabschnitte 23 monolithisch, also aus einem Stück bestehend, hergestellt werden.

Die Herstellung des Düsenabschnitts 23 aus Kunststoff bietet Vorteile hinsichtlich des Gewichts, der thermischen Isolierung zur Reduzierung des Energieverlustes und der geringen Kondensatbildung an den Oberflächen bei der Verwendung gekühlten Temperiergases. Hierbei werden insbesondere Kunststoffe eingesetzt, die Temperaturbeständig und beständig gegen aus dem Folienschlauch emittierenden Stoffen, wie Monomeren, sind.

Der Düsenabschnitt 23 weist einen Anschlussstutzen 47 auf, der über eine hier nicht dargestellte Leitung mit einem Anschluss 48 des Trägers 39 zum Zuführen von Temperiergas verbunden ist. Der Träger 39 ist hohl ausgebildet und leitet Temperiergas zu den Anschlüssen 48, wobei für jeden Düsenabschnitt 23 ein Anschluss 48 vorhanden ist.

In dem gezeigten Ausführungsbeispiel sind die Führungsrollen 22 eines Paares höhenversetzt in Richtung der Längsachse L, die parallel zur Z-Achse des kartesischen Koordinatensystems entspricht, zueinander angeordnet. Grundsätzlich können die Führungsrollen 22 jedoch auch in einer gemeinsamen Ebene in Richtung der Längsachse angeordnet sein.

Die Ausblasdüse 45 sind jeweils geringfügig kürzer gestaltet als die zugehörige Führungsrolle 22, wie dies insbesondere in Figure 4 erkennbar ist. Grundsätzlich sollten die Ausblasdüsen 45 sich maximal über eine Länge erstrecken, die der Länge der jeweiligen Führungsrolle 22 entspricht, vorzugsweise eine Länge von 50 % bis 100 % der Länge der Führungsrolle 22 aufweisen. Dadurch wird der Folienschlauch gezielt im Bereich des Eingriffs der jeweiligen Führungsrolle 22 temperiert.

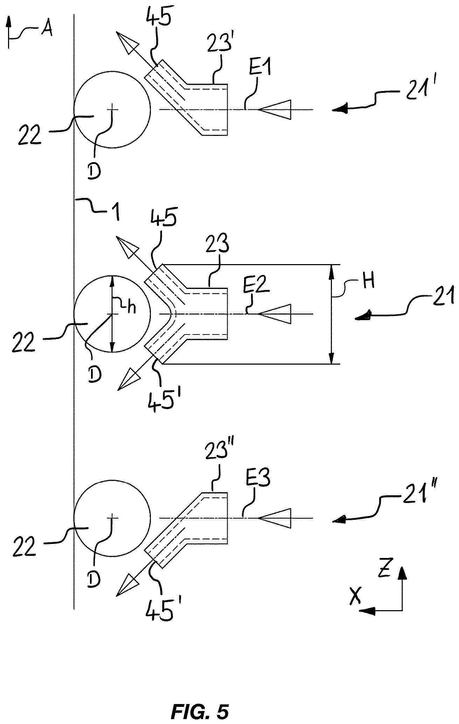

**Figur 5** zeigt eine schematische Seitenansicht der ersten Ausführungsform eines Einstellsegments 49 gemäß **Figur 1****,** wobei Bauteile, die mit Bauteilen der zweiten Ausführungsform gemäß **Figur 3** übereinstimmen, mit denselben Bezugszeichen versehen und dort beschrieben sind.

Schematisch sind für drei Führungsebenen E1, E2, E3 die Führungssegmente 21, 21', 21" mit Düsenabschnitten 23, 23', 23" und den jeweiligen Führungsrollen 22 im Verhältnis zum Folienschlauch 1 dargestellt. Der Düsenabschnitt 23 der zweiten Führungsebene E2 entspricht in seiner Gestaltung dem Düsenabschnitt 23 des Führungssegments 21 der zweiten Ausführungsform des Einstellsegments 49 gemäß der **Figur 3.**

Der Düsenabschnitt 23 weist eine in Abzugsrichtung A ausgerichtete Ausblasdüse 45 und eine entgegen der Abzugsrichtung A ausgerichtete Ausblasdüse 45' auf. Hierbei bedeutet "in Abzugsrichtung A ausgerichtet", dass die Ausblasdüse 45 derart gestaltet ist, dass das Temperiergas zumindest einen Strömungsvektor aufweist, der in Abzugsrichtung A in einem Winkel von weniger als 90° zur Längsachse L ausgerichtet ist. "Entgegen der Abzugsrichtung" bedeutet, dass die Ausblasdüse 45' derart gestaltet ist, dass das Temperiergas mindestens einen Strömungsvektor entgegen der Abzugsrichtung A in einem Winkel von weniger als 90° zur Längsachse L aufweist. Grundsätzlich ist es jedoch auch denkbar, dass der Düsenabschnitt 23 derart gestaltet ist, dass zumindest eine Ausblasdüse derart gestaltet ist, dass das Temperiergas in einem Winkel von 90° zur Längsachse ausströmt.

Der Düsenabschnitt 23 ist, bezogen auf die Längsachse L, teilweise in radialer Überdeckung zur Führungsrolle 22 der zweiten Führungsebene E2 angeordnet. Ein Teil des Düsenabschnitts 23 ragt in Abzugsrichtung A und ein Teil entgegen der Abzugsrichtung A über die Führungsrolle 22 über. Grundsätzlich kann der Düsenabschnitt 23 auch derart gestaltet sein, dass er vollständig in radialer Überdeckung mit der Führungsrolle 22 angeordnet ist.

In dem gezeigten Ausführungsbeispiel weist der Düsenabschnitt 23 in Richtung der Längsachse L eine maximale Höhe H auf, die größer ist als die Höhe h der Führungsrolle 22 in Richtung der Längsachse L.

In dem gezeigten Ausführungsbeispiel weist der Düsenabschnitt 23 in Richtung zur Führungsrolle 22 ein V-förmiges Profil auf, welches die Führungsrolle 22 geringfügig umschließt. Somit ist der Düsenabschnitt 23, bezogen auf die Längsachse L, auch teilweise in radialer Überdeckung mit der Führungsrolle 22 angeordnet. Es ist auch denkbar, dass keine axiale Überdeckung vorgesehen ist. Die axiale Überdeckung kann auch größer als in dem gezeigten Ausführungsbeispiel dargestellt sein. Zum Beispiel können die Ausblasdüsen 45, 45' in Richtung der Längsachse L betrachtet zwischen der Drehachse D der Führungsrolle und dem Folienschlauch 1 angeordnet sein.

Im Unterschied zu dem Düsenabschnitt der zweiten Führungsebene E2 weist der Düsenabschnitt 23' der ersten Führungsebene E1 lediglich eine Ausblasdüse 45 auf, die in Abzugsrichtung A ausgerichtet ist. Der Düsenabschnitt 23" der dritten Führungsebene E3 weist lediglich eine Ausblasdüse 45' auf, die entgegen der Abzugsrichtung A ausgerichtet ist.

Somit bläst der Düsenabschnitt 23 der mittleren zweiten Führungsebene E2 sowohl nach oben als auch nach unten bzw. in Abzugsrichtung A und entgegen der Abzugsrichtung A aus. Der Düsenabschnitt 23' der ersten Führungsebene 1 hingegen bläst nur nach oben in Abzugsrichtung A aus, wohingegen der Düsenabschnitt 23" der dritten Führungsebene E3 nur nach unten entgegen der Abzugsrichtung A ausbläst.

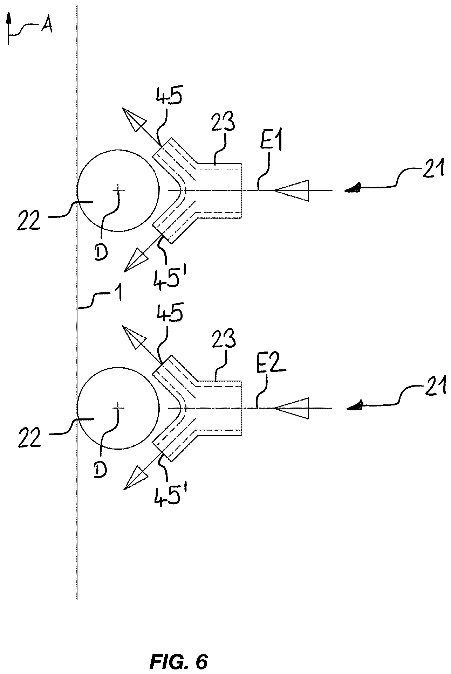

**Figur 6** zeigt eine schematische Seitenansicht der zweiten Ausführungsform des Einstellsegments 49 gemäß **Figur 3****,** wobei Bauteile, die mit Bauteilen der ersten Ausführungsform gemäß **Figur 1** übereinstimmen, mit denselben Bezugszeichen versehen und dort beschrieben sind.

Im Unterschied zur ersten Ausführungsform weist die zweite Ausführungsform des Einstellsegments 49 zwei Führungsebenen E1, E2 auf. Die Führungssegmente 21 der beiden Führungsebenen E1, E2 sind identisch ausgebildet und entsprechen denen der zweiten Ebene der ersten Ausführungsform. Beide Düsenabschnitte 23 blasen somit sowohl nach oben als auch nach unten bzw. in Abzugsrichtung A und entgegen der Abzugsrichtung A aus.

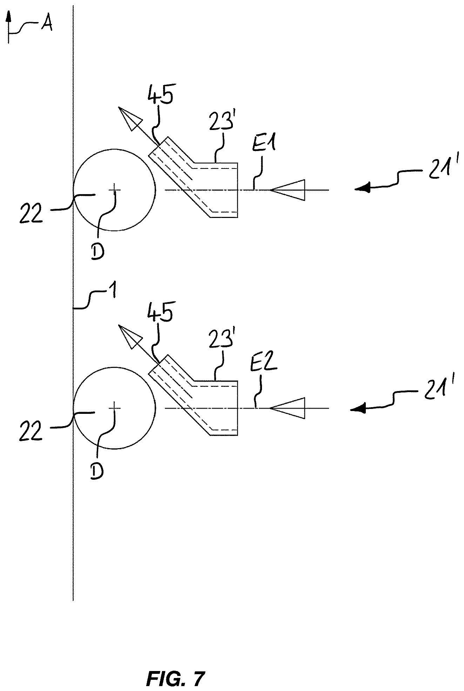

**Figur 7** zeigt eine schematische Seitenansicht einer dritte Ausführungsform eines Einstellsegments 49, wobei Bauteile, die mit Bauteilen der ersten beiden Ausführungsformen übereinstimmen, mit denselben Bezugszeichen versehen und dort beschrieben sind.

Die dritte Ausführungsform des Einstellsegments 49 weist wie die zweite Ausführungsform zwei Führungsebenen E1, E2 auf. Die Führungssegmente 21' der beiden Führungsebenen E1, E2 sind identisch ausgebildet und entsprechen denen der ersten Ebene der ersten Ausführungsform. Beide Düsenabschnitte 23 blasen somit nach oben in Abzugsrichtung A aus. Denkbar ist auch, dass die beiden Führungselemente identisch zu dem Führungselement der dritten Ebene der ersten Ausführungsform ausgebildet sind und somit nach unten entgegen der Abzugsrichtung A ausblasen.

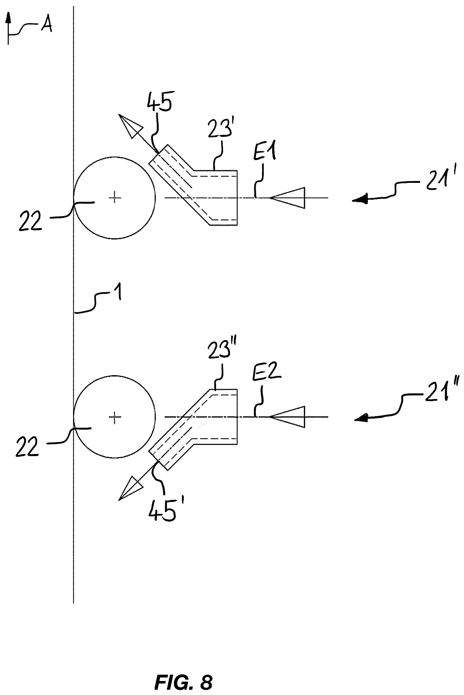

**Figur 8** zeigt eine schematische Seitenansicht einer vierten Ausführungsform eines Einstellsegments 49, wobei Bauteile, die mit Bauteilen der ersten drei Ausführungsformen übereinstimmen, mit denselben Bezugszeichen versehen und dort beschrieben sind.

Die vierte Ausführungsform des Einstellsegments 49 weist wie die zweite Ausführungsform zwei Führungsebenen E1, E2 auf. Das Führungssegment 21' der ersten Führungsebene E1 ist identisch zu dem Führungssegment der ersten Ebene der ersten Ausführungsform ausgebildet und bläst somit nach oben in Abzugsrichtung A aus. Das Führungssegment 21" der zweiten Führungsebene E2 ist identisch zu dem Führungssegment der dritten Ebene der ersten Ausführungsform ausgebildet und bläst somit nach unten entgegen der Abzugsrichtung A aus.

### Bezugszeichenliste

- 1: Folienschlauch
- 2: Maschinenfundament
- 3: Extruder
- 4: Aufgabetrichter
- 5: Aufgabetrichter
- 6: Blaskopf
- 7: Ringdüse
- 8: Flachlegeeinheit
- 9: Abziehwerk
- 10: Kühlgasring
- 11: Gaszuleitung
- 12: Gebläse
- 13: Austrittsdüse
- 14: Einfriergrenze
- 15: Innenkühlturm
- 16: Gasabsaugrohr
- 17: Kalibrierkorb
- 18: Kalibrierelement
- 19: zentrale Öffnung des Kühlgasrings
- 20: Temperiervorrichtung
- 21, 21', 21": Führungssegment
- 22: Führungsrolle
- 23, 23', 23": Düsenabschnitt
- 24: Gebläse
- 25: Zuführleitung
- 26: Luftverteilerring
- 27: Zuleitung
- 28: Luftkühler
- 29: Lufterhitzer
- 30: Turmgerüst
- 31: Steuereinheit
- 32: Temperatursensor
- 33: Drucksensor
- 34: Temperatursensor
- 35: Temperatursensor
- 36: Rahmen
- 37: Verstelleinheit
- 38: Schwenkarm
- 39: Träger
- 40: Koppelstange
- 41: Mitnehmer
- 42: Führung
- 43: Platte
- 44: Halteplatten
- 45, 45': Ausblasdüse
- 46: Lagerplatte
- 47: Anschlussstutzen
- 48: Anschluss
- 49: Einstellsegment

- A: Abzugsrichtung
- D: Drehachse
- E1: erste Führungsebene
- E2: zweite Führungsebene
- E3: dritte Führungsebene
- F: Durchmesser der Führungsöffnung
- h: Höhe einer Führungsrolle
- H: maximale Höhe eines Düsenabschnitts
- K: Durchmesser der Kalibrieröffnung
- L: Längsachse

## Patentansprüche

1. Temperiervorrichtung (20) zum Temperieren eines in einer Abzugsrichtung (A) extrudierten Folienschlauchs (1) oberhalb einer Einfriergrenze (14) umfassend:
mehrere Führungssegmente (21, 21', 21"), die um eine Längsachse (L), die parallel zur Abzugsrichtung (A) des Folienschlauchs (1) angeordnet ist, verteilt angeordnet sind und eine zentrale Führungsöffnung zum Hindurchführen des Folienschlauchs (1) entlang der Längsachse (L) bilden, wobei die Führungssegmente (21, 21', 21") zum Einstellen des Durchmessers (F) der Führungsöffnung quer zur Längsachse (L) verstellbar sind,
eine Führungsrolle (22) je Führungssegment (21, 21', 21"), wobei die Führungsrolle (22) zusammen mit dem Führungssegment (21, 21', 21") verstellbar ist und dazu bestimmt ist, den extrudierten Folienschlauch (1) zu führen, und
einen der Führungsrolle (22) zugeordneten Düsenabschnitt (23, 23', 23"), der zusammen mit dem Führungssegment (21, 21', 21") verstellbar ist, wobei der Düsenabschnitt (23, 23', 23") eine Ausblasdüse (45, 45') aufweist, die dazu ausgebildet ist, ein Temperiergas in Richtung zur Längsachse (L) auszublasen,
**dadurch gekennzeichnet,**
**dass** der Düsenabschnitt (23, 23', 23"), bezogen auf die Längsachse (L), in zumindest teilweiser radialer Überdeckung mit der Führungsrolle (22) angeordnet ist.

2. Temperiervorrichtung (20) nach Anspruch 1,
**dadurch gekennzeichnet,**
**dass** der Düsenabschnitt (23, 23', 23") bezogen auf die Längsachse (L) zumindest teilweise radial außerhalb der Führungsrolle (22) angeordnet ist.

3. Temperiervorrichtung (20) nach Anspruch 1 oder 2,
**dadurch gekennzeichnet,**
**dass** der Düsenabschnitt (23, 23', 23") über die gesamte Länge der Ausblasdüse (45, 45'), zumindest über 50 % der Länge der Ausblasdüse oder zumindest über 25 % der Länge der Ausblasdüse eine maximale Höhe (H) in Richtung der Längsachse (L) aufweist, die höchstens dem 2,0-fachen, dem 1,5-fachen, dem 1,25-fachen oder dem 1,0-fachen der Höhe (h) der Führungsrolle (22) entspricht.

4. Temperiervorrichtung (20) nach einem der Ansprüche 1 bis 3,
**dadurch gekennzeichnet,**
**dass** die Führungsrollen (22) benachbarter Führungssegmente (21, 21', 21") in Richtung der Längsachse (L) höhenversetzt zueinander angeordnet sind und sich, zumindest bei Unterschreiten eines vorbestimmten Durchmessers der Führungsöffnung (F), in Richtung der Längsachse (L) zumindest teilweise kreuzen.

5. Temperiervorrichtung (20) nach Anspruch 4,
**dadurch gekennzeichnet,**
**dass** die Düsenabschnitte (23, 23', 23") der sich überkreuzenden Führungssegmente (21, 21', 21") zumindest über einen Bereich, in dem sich die Führungssegmente (21, 21', 21") überkreuzen können, eine maximale Höhe (H) in Richtung der Längsachse (L) aufweisen, die höchstens dem 2,0-fachen, dem 1,5-fachen, dem 1,25-fachen oder dem 1,0-fachen der Höhe (h) der jeweiligen Führungsrolle (22) entspricht.

6. Temperiervorrichtung (20) nach einem der Ansprüche 1 bis 5,
**dadurch gekennzeichnet,**
**dass** die Ausblasdüse (45, 45') derart gestaltet ist, dass das Temperiergas mindestens einen Strömungsvektor in und/oder entgegen der Abzugsrichtung (A) in einem Winkel von weniger als 90°, weniger als 60° oder weniger als 45° zur Längsachse (L) aufweist.

7. Temperiervorrichtung (20) nach einem der Ansprüche 1 bis 6,
**dadurch gekennzeichnet,**
**dass** der Düsenabschnitt (23, 23', 23") mehrere Ausblasdüsen (45, 45') aufweist.

8. Temperiervorrichtung (20) nach einem der Ansprüche 1 bis 7,
**dadurch gekennzeichnet,**
**dass** die Düsenabschnitte (23, 23', 23") jeweils integraler Bestandteil des jeweiligen Führungssegments (21, 21', 21") sind.

9. Temperiervorrichtung (20) nach einem der Ansprüche 1 bis 8,
**dadurch gekennzeichnet,**
**dass** jedes Führungssegment (21, 21', 21") mehrere Führungsrollen (22) aufweist.

10. Temperiervorrichtung (20) nach Anspruch 9,
**dadurch gekennzeichnet,**
**dass** mehreren Führungsrollen (22) eines Führungssegments (21, 21', 21") ein gemeinsamer Düsenabschnitt (23, 23', 23") zugeordnet ist.

11. Temperiervorrichtung (20) nach einem der Ansprüche 1 bis 10,
**dadurch gekennzeichnet,**
**dass** die Temperiervorrichtung (20) eine Kühleinheit (28) zum Kühlen des Temperiergases und/oder eine Heizeinheit (29) zum Heizen des Temperiergases aufweist.

12. Temperiervorrichtung (20) nach einem der Ansprüche 1 bis 11,
**dadurch gekennzeichnet,**
**dass** die Temperiervorrichtung (20) mindestens zwei in Richtung der Längsachse (L) übereinander angeordnete Führungsebenen (E1, E2, E3) von Führungssegmenten (21, 21', 21"), die um die Längsachse (L) verteilt angeordnet sind, aufweist.

13. Temperiervorrichtung (20) nach Anspruch 12,
**dadurch gekennzeichnet,**
**dass** über den Umfang verteilt stets mindestens zwei Führungssegmente (21, 21', 21") in Richtung der Längsachse (L) übereinander angeordnet sind.

14. Temperiervorrichtung (20) nach einem der Ansprüche 1 bis 13,
**dadurch gekennzeichnet,**
**dass** die Temperiervorrichtung (20) Verstelleinheiten (37) umfasst, mittels derer die Führungssegmente (21, 21', 21") derart quer zur Längsachse (L) verstellbar sind, dass die jeweilige Führungsrolle (22) zentrisch zur Längsachse (L) bewegt wird.

15. Folienblasanlage umfassend:
einen Blaskopf (6) zum Ausstoßen eines Folienschlauchs (1) aus plastifiziertem thermoplastischem Kunststoff in einer Abzugsrichtung (A) entlang einer Längsachse (L) und
einen Kühlgasring (10) in Abzugsrichtung (A) stromab des Blaskopfs (6), der eine zentrale Öffnung zum Hindurchführen des plastifizierten Folienschlauchs (1) bildet und der zumindest eine innenliegende Austrittsdüse (13) zum Anströmen des Folienschlauchs (1) mit Kühlgas aufweist, damit der Folienschlauch (1) an einer Einfriergrenze (14) vom plastischen in einen erstarrten Zustand übergeht,
**gekennzeichnet durch**
eine Temperiervorrichtung (20) nach einem der Ansprüche 1 bis 14, die dazu bestimmt ist, stromab der Einfriergrenze (14) angeordnet zu werden.

16. Folienblasanlage nach Anspruch 15,
**gekennzeichnet durch**
einen Kalibrierkorb (17) stromab des Kühlgasrings (10) mit mehreren Kalibrierelementen (18), die dazu eingerichtet sind, den Folienschlauch (1) zu umschließen und eine Kalibrieröffnung zu bilden, um den Folienschlauch (1) zu führen, wobei die Kalibrierelemente (18) zum Einstellen eines Durchmessers (K) der Kalibrieröffnung verstellbar sind,
wobei die Temperiervorrichtung (20) stromab des Kalibierkorbs (17) angeordnet ist und mit dem Kalibierkorb (17) verbunden ist oder axial beabstandet zu diesem angeordnet ist.

17. Folienblasanlage nach Anspruch 15 oder 16,
**dadurch gekennzeichnet,**
**dass** die Folienblasanlage stromab der Temperiervorrichtung (20) eine Flachlegeeinheit (8) zum Zusammenlegen des Folienschlauchs (1) umfasst und dass ein Bereich zwischen der Temperiervorrichtung (20) und der Flachlegeeinheit (8) frei von den Folienschlauch (1) beeinflussenden Elementen ist.
